# EUROPEAN PATENT APPLICATION

(11) **EP 4 748 673 A1**
(43) Date of publication of application: **27.05.2026**
(21) Application number: 23945883.9
(22) Date of filing: 19.07.2023
(51) Int. Cl.: B60W 30/10, B60W 60/00

(54) **DRIVING CONTROL METHOD AND DRIVING CONTROL DEVICE**

(71) Applicant: Nissan Motor Co., Ltd., Yokohama-shi, Kanagawa 221-0023 (JP)
(72) Inventor: TANIGUCHI, Yohei, Atsugi-shi, Kanagawa 243-0123 (JP)
(74) Representative: Grünecker Patent- und Rechtsanwälte PartG mbB
(86) International application number: PCT/JP2023/026447
(87) International publication number: WO 2025/017880

(57) **Abstract**

Provided is an autonomous driving control method, wherein, in lane change control for autonomously moving a subject vehicle (V1) to an adjacent lane from a target lane in which the subject vehicle (V1) is traveling upon satisfaction of a preliminarily-set lane change condition, features of the target lane in which the subject vehicle (V1) travels are determined based on lane information of a route, lane change control is executed upon a determination based on the features that the target lane is a first lane, and upon a determination that the target lane is a second lane other than the first lane, execution of the lane change control is prohibited and the subject vehicle is caused to continue traveling in the second lane.

## Description

### Technical Field

The present disclosure relates to a driving control method and a driving control device, including autonomous lane change control.

### Background Art

A technique is known, in which when a preceding vehicle traveling at a second vehicle speed slower than a first vehicle speed, which is the control speed of a subject vehicle, is detected, the subject vehicle is made to travel to follow the preceding vehicle at the second speed, and when a request to change lanes from an overtaking lane to the travel lane is detected while traveling to follow the preceding vehicle, the control speed of the subject vehicle is made equal to or lower than the second vehicle speed.

### Prior Art Documents

### Patent Documents

Patent Document 1: JP2020-015480A

### Summary of Invention

### Problems to be solved by Invention

However, if the subject vehicle changes lanes without taking into account the features of the lane in which the subject vehicle is traveling, it may detect a low-speed preceding vehicle again and repeatedly change lanes, or it may continue traveling in the same lane without changing lanes, making other vehicles decelerate behind it.

A problem to be solved by the present invention is to provide a driving control method and a driving control device that include lane change control preventing the subject vehicle from repeatedly changing lanes and also preventing the occurrence of deceleration by other vehicles behind.

### Means for solving Problems

The present invention solves the above problem by using autonomous lane change control to execute a lane change when the target lane in which the subject vehicle is traveling is a first lane that is located at the most extreme end of the route, and to prohibit a lane change when the target lane is a second lane other than the first lane.

### Effect of Invention

According to the present invention, by performing the lane change control in accordance with the features of the lane in which the subject vehicle is traveling, it is possible to suppress deceleration other vehicles behind make while also suppressing repeated lane changes the subject vehicle makes, thus maintaining smooth traffic flow.

### Brief Description of Drawings

[FIG. 1] FIG. 1 is a block diagram illustrating the hardware configuration of a driving control system.
[FIG. 2] FIG. 2 is a first flowchart illustrating the driving control process.
[FIG. 3] FIG. 3 is a second flowchart illustrating the driving control process.
[FIG. 4] FIG. 4 is a set of plan views for describing lane change control.

### Mode(s) for carrying out Invention

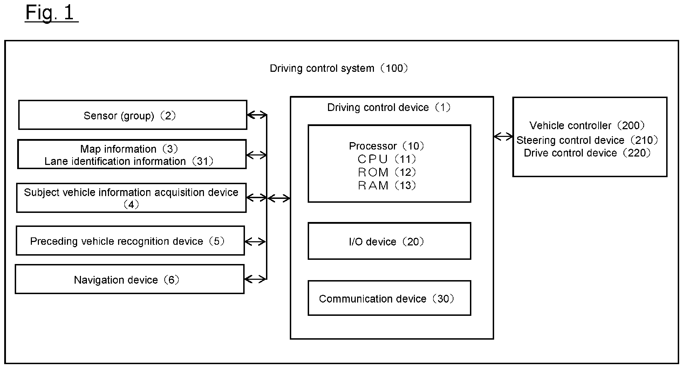

FIG. 1 illustrates the configuration of a vehicle driving control system 100 according to the present embodiment. Processor 10 of a driving control device 1 illustrated in FIG. 1 includes: a ROM (Read Only Memory) 12 storing programs for controlling autonomous driving, including lane change control; a CPU (Central Processing Unit) 11 that executes the programs stored in the ROM 12; and a RAM (Random Access Memory) 13 that serves as an accessible storage device. The present driving control method is carried out using the various hardware components of the driving control system 100, including at least the processor 10.

The processor 10 executes at least a lane determination function, a lane change function, and an autonomous driving function through cooperation of software for achieving the above functions and the various hardware components illustrated in FIG. 1.

The lane determination function is a function for determining the features of a target lane in which the subject vehicle travels. The "features" of the target lane include information on the relative position (most extreme end/outermost end position, non-most extreme end/ non-outermost end position) along the road width direction of the lane's route. This function is used to determine the presence or absence of features that the target lane on a route (road) is a most extreme position along the road width direction. The "features" of the target lane include attributes of lanes such as an overtaking lane and an irregular lane. This function is used to determine the features of the target lane based on an attribute of the lane of the route. The attribute of a lane can be obtained from lane identification information 31 included in map information 3 or from lane identification information 31 included in a transportation system server accessible via a communication device 30.

The lane change function includes a function for autonomously moving the subject vehicle based on sensor detection information from the target lane in which it is traveling to an adjacent lane, when a preliminarily-set lane change condition is satisfied. The lane change function is also used to determine and control execution/prohibition of the lane change control based on the features of the target lane.

The autonomous driving function is a function for autonomously driving the subject vehicle along a route to the destination based on a driving plan via a vehicle controller 200. The driving plan includes a plan for lane changes and is a set of control instructions for autonomously moving the subject vehicle to the destination.

The processor 10 receives commands from the user via an I/O device 20 and presents the user with control content as the result of calculations. User operations, text, voice, and image data can be used for input and output of information. The processor 10 is connected to a CAN (Controller Area Network) or other onboard LAN and exchanges information with each device within the driving control system 100. The processor 10 exchanges information with devices external to the driving control system 100, such as a map information server, a traffic information server, and communication devices provided in roadside devices, via a wired and/or wireless communication network.

The vehicle is provided with a plurality of sensors 2, which form a sensor group. Each sensor 2 acquires external information according to its respective function and transmits the acquired detection information to the processor 10. The sensors 2 include one or more cameras. The cameras include image sensors equipped with imaging elements such as CCDs, ultrasonic cameras, and infrared cameras mounted on the vehicle. Each camera captures images of the lane patterns around the subject vehicle (forward, backward, and to the sides), lane-related signs on the road surface, and signs provided at positions at which they can be recognized by the onboard cameras. Information on the lane (attributes, traffic rules, and changes in traffic rules) can be obtained from the captured images of the signs. The sensors 2 include a ranging sensor that detects objects and their positions around the subject vehicle. The sensors 2 detect the presence or absence, relative speed, and relative acceleration of other vehicles traveling ahead of the subject vehicle or in adjacent lanes to the subject vehicle. Examples of ranging sensors that can be used include laser radar, millimeter-wave radar (such as LRF), LiDAR (light detection and ranging), and ultrasonic radar.

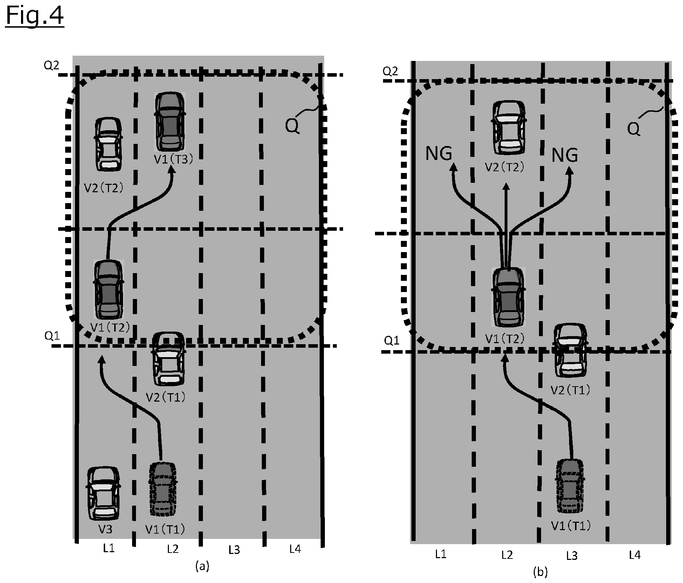

The map information 3 includes high-precision map information referenced in execution of autonomous lane change control and location information for the area in which the subject vehicle can use this information (area Q illustrated in FIG. 4, described later). The area is defined by the start and end positions or boundary positions (coordinates) of each road or lane. The map information 3 also includes lane identification information 31 for lanes belonging to a route (road). The lane identification information 31 includes one or more of information on the lane's position on a road (route) (information on its relative position such as at the most extreme end along the road width), and information on attributes as to whether or not the lane is an overtaking lane and whether or not the lane is an irregular lane. An irregular lane is a lane in which special, irregular, or anomaly handling is applied to the traffic of vehicles traveling thereon. Irregular lanes include dedicated lanes in which only specific vehicles are permitted to travel, and lanes with variable traffic rules whose traffic rules are changed depending on a time slot. Specific vehicles include vehicles with a certain number of occupants (e.g., two or more), public transportation vehicles such as buses, vehicles with reduced emissions, and clean energy vehicles, and are subject to special permission to travel preferentially in irregular lanes. Variable-rule lanes are bidirectional or reversible lanes whose rules regarding driving direction are changed depending on a time slot (inbound/outbound traffic is reversed) in accordance with traffic planning, or whose rules regarding turning/entering are changed depending on a time slot. Assuming that traffic rules are consistent as a general rule, these lanes can be considered lanes in which irregular/anomaly traffic rules apply.

Subject vehicle information acquisition device 4 acquires information on the subject vehicle during the driving, such as the subject vehicle's current location, speed, and direction of travel. The subject vehicle information acquisition device 4 includes a GPS (Global Positioning System) unit, a gyro sensor, a vehicle speed sensor, etc., and recognizes the subject vehicle's location at each timing. On the basis of detection information from the sensors 2, preceding vehicle recognition device 5 recognizes the subject vehicle's lane and its current or future relative speed and distance to other vehicles ahead in the adjacent lane, and provides this information to the processor 10. Navigation device 6 references the map information 3 and calculates a route to the set destination. The calculated route is used for the autonomous driving control.

The vehicle controller 200 includes a steering control device 210 and a drive control device 220. The vehicle controller 200 acquires command values for the autonomous driving control in accordance with a driving plan created by the processor 10 of the driving control device 1, and allows the subject vehicle to travel a route to the destination. The command values include a set speed for the vehicle to travel. The vehicle controller 200 drives the subject vehicle in accordance with the set speed. The set speed may be set by the driver, or may also be automatically set in accordance with predetermined criteria based on detection information from the sensors 2, such as the distance to a preceding vehicle, and the relative speed and relative acceleration relative to the preceding vehicle. The set speed may be set for each lane. The predetermined criteria are based on legal regulations. The set speed in the autonomous driving control is required to be less than the legal speed limit for the lane. The upper limit of the set speed may be set in accordance with traffic regulations related to autonomous driving and vehicle performance. The upper limit of the set speed can also be set appropriately by the vehicle operator or driver. The command values for the driving control are generated by the vehicle controller 200 or the processor 10. On the basis of the command values, the vehicle controller 200 inputs longitudinal and lateral forces that control the traveling position of the subject vehicle V1. The vehicle body behavior and wheel behavior are controlled based on these inputs so that the subject vehicle autonomously travels along the route to the destination. On the basis of these controls, at least one of the drive actuator and brake actuator of the vehicle body drive mechanism controlled by drive control device 220, and the steering actuator of the steering control device 210, which is activated as needed, operate autonomously, thereby executing the autonomous driving control that allows the vehicle to autonomously travel along the route to the destination. As a matter of course, the vehicle controller 200 can also execute driving in accordance with command values based on manual operation by the driver.

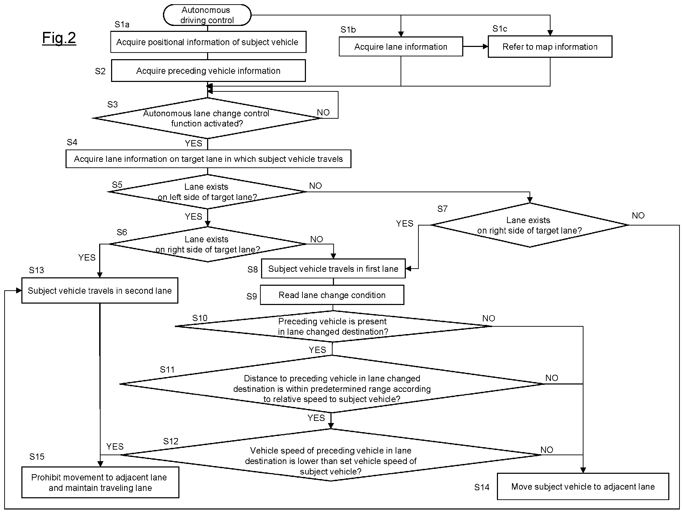

The driving control, including autonomous lane change control, will be described based on the flowchart of FIG. 2. The lane change control is executed in a scene in which the subject vehicle is moved into an adjacent lane to follow the route to the destination or to overtake a preceding vehicle traveling in the same lane as the subject vehicle. The processor 10 acquires the current location of the subject vehicle from the subject vehicle information acquisition device 4 as needed (S1a) and acquires lane information regarding the lanes of the route to the destination from the sensors 2 (S1b). The route to the destination is acquired from the navigation device 6. The processor 10 references the map information to collect information necessary for the lane change control, which is an advanced driving control (such as information on an area Q for which high-precision map information is available) (S1c). The processor 10 may also reference the map information 3 to acquire the lane information (S1b to S1c). The lane information includes information for identifying the lane features, specifically the lane's position along the road width direction and lane attributes (overtaking lanes, irregular lanes, dedicated lanes, variable-rule lanes). The processor 10 can determine, based on the lane information, the features of the target lane in which the subject vehicle travels. The processor 10 then acquires information from the sensors 2, such as the presence or absence of a preceding vehicle, its location (distance), relative speed, and relative acceleration (S2). Each piece of information is acquired at a predetermined interval. The processor 10 sequentially determines whether or not the autonomous lane change control function has been activated (S3). An example of this determination scheme is to reference the level of detail for each location in the map information 3 and determine whether or not the current location of the subject vehicle is within an "area" (see area Q in FIG. 4, described later) in which the autonomous lane change control can be executed. This "area" is an area in which the lane identification information 31, which can be used to identify each of the plurality of lanes included in the route, is available. Specifically, the "area" is an area in which a high-precision map containing identification information for each lane is available, and in which the driving control device 1 can use the lane identification information 31 of the map information 3. The "area" may also be an area in which a system is available for which the lane identification information 31 for each lane is provided from an external server, such as a roadside device. On the basis of the location information and boundary information defining the area stored in the map information 3 and the current location of the subject vehicle, the processor 10 determines whether the subject vehicle is within or outside the area. The processor 10 detects the current location of the subject vehicle and determines that the autonomous lane change control is possible when the subject vehicle enters an area in which execution of the autonomous lane change control is possible. In response to this determination, the processor 10 activates the autonomous lane change control function. Once the autonomous lane change control function is activated, execution of the lane change control processing is started in accordance with the features of the target lane.

The processor 10 acquires the lane information for a route that includes the target lane in which the subject vehicle is traveling (S4). The processor 10 determines, based on the acquired lane information, the features of the target lane in which the subject vehicle travels. In this control example, the features of the target lane represent the relative lateral position in the route of the target lane. Specifically, the processor 10 determines whether the target lane is at the rightmost or leftmost end in the road width direction.

The processor 10 determines whether or not the target lane in which the subject vehicle travels is the first lane, which is located at the most extreme end, among the lanes of the route. When the target lane is not the first lane, the target lane is determined to be the second lane. The lane information includes images captured by cameras serving as the sensors 2. Images captured by the onboard cameras (sensors 2) during travel include images of lane markers that separate the left and right ends of the lanes along the vehicle width direction. The images of lane markers can be used to identify the appearance of the left and right lane markers of the target lane (such as solid lines, dashed lines, colors, roadside structures, and curbs). The processor 10 determines the relative position of the target lane among the plurality of lanes included in the route based on the appearance of the left and right lane markers of the target lane, or a combination of the appearances of the left and right lane markers. For example, when it is recognized that the lane on the left side of the target lane is a solid line and the lane on the right side is a dashed line, the target lane can be determined to be the first lane, the leftmost lane of the route. When a guardrail, tree strip, or other road shoulder structure or curb is provided on the left side of the target lane, the target lane can be determined to be the first lane at the leftmost end of the route using a pattern matching method based on the camera image. On the other hand, when dashed lines are recognized on both sides of the target lane, the target lane can be determined not to be the first lane at the most extreme end of the route. Furthermore, by extracting the graphics and text of signs displayed on the road surface or signs provided above the road or on the road shoulder from the captured image and recognizing the meaning of the signs, the target lane can be determined to be an overtaking lane or an irregular lane.

The processor 10 also references the lane identification information 31 of the map information 3 to determine whether or not the target lane is located at the most extreme end of the route. The lane identification information 31 of the map information 3 includes the location of each lane included in each route (information on whether or not it is the lane at the most extreme end, information that it is the N-th lane from the most extreme end) and the attribute of a lane (identification information for the overtaking lane, identification information for the traveling lane, identification information for the irregular lane). In general, overtaking lanes are located at the leftmost or rightmost end of a route (road), and it is therefore possible to determine whether or not the target lane is at the leftmost or rightmost end based on the lane identification information 31 indicating an overtaking lane.

The processor 10 determines whether or not a lane exists on the left side of the target lane based on the lane information for the route (S5). When a lane exists on the left side (YES in S5), it determines whether or not a lane exists on the right side of the target lane (S6). When a lane exists only on the left side of the target lane (YES in S5 and NO in S6), the processor 10 determines that the target lane is located at the rightmost end of the plurality of lanes of the route and that the target lane is the first lane (S8). Referring again to S5, when there is no lane on the left side (NO in S5), it determines whether or not there is a lane on the right side of the target lane (S7). When there is another lane only on the right side of the target lane (NO in S5 and YES in S7), the processor 10 determines that the target lane is located at the leftmost end of the plurality of lanes of the route along the road width direction and that the target lane is the first lane (S8). The first lane is the lane, among the plurality of lanes of the route, located at the most extreme end.

On the other hand, when there are other lanes on both the left and right sides (YES in S5 and YES in S6), the target lane is not located at the rightmost/leftmost end. If there is no other lane on either the left or right side (NO in S5 and NO in S7), the route has a single lane and does not have a plurality of lanes. In either case, the processor 10 determines that the target lane is the second lane (S13). The second lane is a lane that is not the first lane. When determining in step S13 that the target lane in which the subject vehicle is traveling is the second lane other than the first lane, the processor 10 prohibits execution of the lane change control and causes the subject vehicle to continue traveling in the second lane in which it is currently traveling (S15). Before the processing of step S15, the processor 10 may notify or propose to the driver the control content to travel in the current lane without changing lanes, and may execute the lane change control after obtaining the acceptance.

When a determination is made that the target lane in which the subject vehicle is traveling is the first lane (S8), the process proceeds to step S9. The processor 10 reads the lane change condition (S9) and determines the satisfaction/unsatisfaction of the lane change condition based on information obtained from the sensors 2, the subject vehicle information acquisition device 4, and the preceding vehicle recognition device 5. The result of determination of the satisfaction/unsatisfaction of the lane change condition can be presented to the occupants via the I/O device 20. The occupants include the driver. The presented information allows the occupants to know the possibility of execution of the lane change control. The processor 10 detects a preceding vehicle traveling in the lane to which the lane change is to be made (S10). When no preceding vehicle is present in the specified detection area (NO in S10), the traveling space after the lane change is secured, and the process proceeds to step S14. The processor 10 determines whether or not the distance between the subject vehicle and a preceding vehicle detected in the lane to which the lane change is to be made is within a predetermined range (greater than or equal to a first distance and less than a second distance (>first distance)) (YES in S10, S11). The presence of a preceding vehicle traveling far enough away (greater than or equal to the second distance) that it does not affect the execution of lane change of the subject vehicle V1 can be ignored. The threshold for distance is set from the perspective of whether or not a traveling space necessary for the subject vehicle V1 to execute a lane change will be created in the destination lane. The threshold for the distance between the preceding vehicle and the subject vehicle can be defined in accordance with the relative speed between the preceding vehicle and the subject vehicle. When no preceding vehicle is present within the set predetermined range (NO in S11), a traveling space after the lane change is secured, and the process proceeds to step S14. Even when a preceding vehicle is present within the predetermined range (YES in S11), if the vehicle speed of the preceding vehicle in the lane to which the lane change is to be made is higher than the set speed of the subject vehicle (NO in S12), it is expected that a traveling space for the subject vehicle V1 will eventually be created, and the process proceeds to step S14. In step S14, the processor 10 starts the lane change control and moves the subject vehicle from the target lane to the adjacent lane. The processor 10 may also notify or propose a lane change to the driver before the processing of step S14 and execute the lane change control after obtaining the acceptance.

On the other hand, even when a preceding vehicle is present within the predetermined range (YES in both S10 and S11), if the vehicle speed of the preceding vehicle in the lane to which the lane change is to be made is lower than the set speed of the subject vehicle (YES in S12), the process proceeds to step S15 because it is unlikely that a sufficient space will be created for the subject vehicle V1 to change lanes. In S15, as described above, the driving control is performed to maintain the current lane without changing lanes. Although it is currently difficult to execute a lane change (YES in S12), continuing to travel in the first lane, in which the traveling speed is relatively high, will likely eventually allow the subject vehicle V1 to overtake the preceding vehicle as the subject of consideration in S12. At that time, the possibility of executing a lane change from the first lane can be reconsidered. Such a determination to wait for the next opportunity allows a lane change to be executed without disrupting the traffic flow in the target lane. The threshold value may be given a hysteresis (width) to prevent the determination result in S12 from oscillating near the threshold boundary.

Furthermore, the lane change condition may include a condition as to whether or not there is a space that allows the subject vehicle to enter a lane adjacent to the destination lane after the lane change. Lanes adjacent to the destination lane after the lane change include the original lane (target lane) in which the subject vehicle was traveling before the lane change. After processing of steps S10, S11, and S12 and before processing of step S14, the processor 10 confirms whether or not there is a space that allows the subject vehicle to move in each of adjacent lanes to the lane in which the subject vehicle will travel after the lane change. In other words, as a lane change condition for executing a lane change from the target lane, the existence of a space that allows the subject vehicle to move from the lane after the lane change to a further adjacent lane is preliminarily confirmed. When it is confirmed that there is a space that allows the subject vehicle to move in an adjacent lane to the lane in which the subject vehicle will travel after the lane change, the process proceeds to step S14. On the other hand, when the existence of such a space is not confirmed, the process proceeds to step S15, even if the determination is YES in S10, YES in S11, and NO in S12.

The first lane at the rightmost or leftmost end of a route is likely to be an overtaking lane. The first lane at the rightmost or leftmost end of a route is expected to have a relatively higher traveling speed than other lanes. When determining, based on the acquired lane information, that the attribute of the target lane is an overtaking lane, the processor 10 determines that the target lane is the first lane. When the map information 3 includes, as the lane identification information 31, attribute information that enables identification as to whether or not the lane is an overtaking lane, this information is used. When such lane identification information 31 can be obtained from a traffic information server or an external device of the transportation system via the communication device 30, this information is used. By using information indicating an overtaking lane to determine whether the target lane is the first or second lane, the processing load can be reduced and a faster determination can be made than by analyzing the captured image acquired by the sensors 2.

The processor 10 does not determine that an irregular lane belongs to the first lane. When determining whether or not a lane is the first lane, irregular lanes are excluded regardless of their location. When a determination is made that attributes as the features of all lanes on the right or left side of the target lane are irregular lanes (dedicated lanes or variable-rule lanes), the processor 10 determines that the target lane is the first lane. In other words, irregular lanes are excluded from the determination, and the lane adjacent to the irregular lanes is determined to be the first lane. In general, an irregular lane is located at the rightmost or leftmost end of a route. Two or more lanes may be irregular lanes, but they are arranged consecutively from the rightmost or leftmost end. Accordingly, a lane located next to one or more irregular lanes, that is, an adjacent lane to the irregular lanes, can be determined to be the first lane.

As a different determination scheme, when the attribute as a feature of the target lane is determined to be an irregular lane based on the lane information, the target lane is determined to be the second lane, not the first lane. In this control, a lane change is made when traveling in the first lane. In other words, determining whether or not a lane is the first lane is an important factor in determining the content of lane change control. In this example, irregular lanes in which only specific vehicles are permitted to travel or whose traffic rules are changed depending on the time slot are not determined to be the first lane. This allows for appropriate determination as to whether or not a lane is the first lane and executes the lane change control that is consistent with the purpose of maintaining smooth traffic flow.

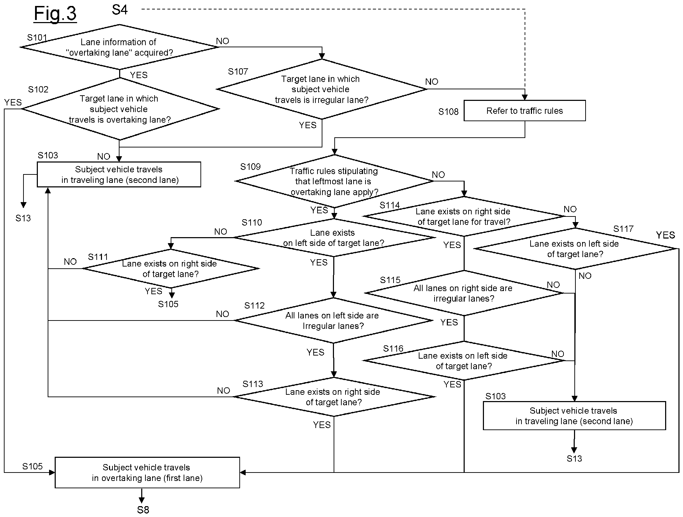

FIG. 3 illustrates the procedure of a procedure of determination processing that takes into account the attributes of lanes, such as an overtaking lane and/or an irregular lane, when determining whether or not the target lane is the first lane. The attributes of lane are one aspect of the features of lanes. The processing of steps S1a, S1b, S1c, S2 to S4, S8 to S15, and S13 to S15 illustrated in FIG. 2 is common, so the aforementioned description will be borrowed herein. In FIG. 3, the processing of S1a, S1b, S1c, and S2 to S4 in FIG. 2 is performed, and the description begins with the processing of S4, in which the lane information of the target lane is acquired.

The lane determination processing of FIG. 3 determines whether or not the lane information related to the lane attributes such as "overtaking lane" or "irregular lane" can be acquired from the lane identification information 31 of the map information 3. The processor 10 reads the specific information (version information/function specific information) of the map information 3 referenced and determines whether or not the map information 3 has the lane identification information 31 that includes the attribute "overtaking lane"

(S101). When the lane information identifying an overtaking lane can be acquired from the lane identification information 31 of the map information 3 (YES in S101) and the target lane is an overtaking lane (YES in S102), the processor 10 determines that the subject vehicle is traveling in the overtaking lane (first lane) (S105). Then, it executes the processing from S8 onwards in FIG. 2. On the other hand, when the target lane is not an overtaking lane (NO in S102), it determines that the subject vehicle is traveling in a lane other than the overtaking lane (second lane) (S103). Then, the process shifts to S13 of FIG. 2 and executes the processing of S15.

When the identification information of an overtaking lane cannot be obtained from the lane information (NO in S101), the process proceeds to S107. The processor 10 reads the specific information (version information) of the map information 3 referenced and determines whether or not the map information 3 has the lane identification information 31 that includes the attribute "irregular lane" (S107). When information indicating that the target lane is an irregular lane is acquired (YES in S107), the target lane is determined to be the second lane (S103). When the target lane is not an irregular lane (NO in S107), traffic rules are referenced (S108). Traffic rules include a rule that an overtaking lane is the leftmost lane (or rightmost lane) of a plurality of lanes on a route (road). In the United States, the leftmost lane (excluding irregular lanes) is the overtaking lane, while in Japan, the rightmost lane (excluding irregular lanes) is the overtaking lane. The processor 10 references traffic rules (S108) and determines whether or not the traffic rules stipulating that the leftmost lane is an overtaking lane apply to the target lane (S109). The processor 10 can determine the traffic rules that apply to the subject vehicle based on the destination of each vehicle written in the ROM 12. The processor 10 may also reference the traffic rules associated with an area or location and determine the traffic rules that apply to the subject vehicle based on the current location of the subject vehicle acquired by the subject vehicle information acquisition device 4. Upon application of the traffic rules stipulating that the leftmost lane is an overtaking lane (YES in S109), when there is no lane on the left side of the target lane (NO in S110) and there is a lane on the right side of the target lane (YES in S111), the processor 10 determines that the subject vehicle is traveling in the first lane, which is an overtaking lane (S105). When there are no lanes on the right or left side of the target lane (NO in S110, NO in S111), the subject vehicle is determined to be traveling in a traveling lane (second lane) that is not an overtaking lane (S103). On the other hand, when there is a lane on the left side of the target lane (YES in S110) but all lanes on the left are not irregular lanes (NO in S112), that is, when there is a lane other than an irregular lane on the left side, the target lane is determined to be a traveling lane (second lane) (S103). When all lanes on the left side are irregular lanes (YES in S110 and YES in S112) but there is no lane on the right side (NO in S113), there are no lanes available for lane change, so the target lane is determined to be a traveling lane (second lane) (S103). When all lanes on the left side are irregular lanes (YES in S110 and YES in S112) and there is also a lane on the right side (YES in S113), the target lane is determined to be an overtaking lane (first lane) (S105).

It is also possible to skip S101 and S107 and proceed from S4 to S108 (indicated by the dashed line in FIG. 3). Even when information on overtaking lanes or irregular lanes is not obtained, the position of the target lane along the road width direction can be determined, such as using images captured by the camera of the sensors 2, as described above. In other words, the processor 10 can determine whether or not the target lane is the first lane on the right or left end by referring to traffic regulations. This allows for highly accurate determination of whether or not the target lane is the first lane which is an overtaking lane, even when the lane attribute information cannot be obtained from the map information 3. As a result, the lane change control can be executed that does not interfere with the smooth travel of the subject vehicle or other vehicles.

Referring again to S109, consider the case in which the traffic rule stipulating that the overtaking lane is the leftmost lane does not apply, that is, the traffic rule stipulating that the overtaking lane is the rightmost lane applies (NO in S109). When there is no lane on the right side of the target lane (NO in S114) but there is a lane on the left side of the target lane (YES in S117), the subject vehicle is determined to be traveling in the first lane, which is the overtaking lane (S105). When there are no lanes on the right or left side of the target lane (NO in S114 and NO in S117), the subject vehicle is determined to be traveling in the second lane (S103). On the other hand, when there is a lane on the right side of the target lane (YES in S114) but none of the lanes on the right side are irregular lanes (NO in S115), that is, when there is a lane other than an irregular lane on the right side, the target lane is determined to be the traveling lane (the second lane) (S103). When all lanes on the right side are irregular lanes (YES in S114 and YES in S115) but there are no lanes on the left side (NO in S116), there are not a plurality of lanes available for lane changes, so the target lane is determined to be the traveling lane (second lane) (S103). When all lanes on the right side are irregular lanes (YES in S114 and YES in S115) and there is also a lane on the left side (YES in S116), the target lane is determined to be an overtaking lane (first lane) (S105). The traveling lane is a lane that is not an overtaking lane and is classified as the second lane.

When, in the above processing, a determination is made that the target lane in which the subject vehicle travels is the first lane, which is an overtaking lane (S105), the process shifts to S8 of FIG. 2 and performs the processing of S9 to S15. On the other hand, when a determination is made that the target lane in which the subject vehicle travels is the second lane, which is a traveling lane (non-overtaking lane) (S103), the process shifts to S13 of FIG. 2 and performs processing of S15.

FIG. 4(a) illustrates an example of the lane change control when the target lane is the first lane, and FIG. 4(b) illustrates an example of the lane change control when the target lane is the second lane. The processor 10 starts the lane change control processing when the autonomous lane change control function is activated. The processor 10 determines the time point when the subject vehicle V1 enters an area Q (indicated by a dashed line) in which execution of the autonomous lane change control is possible, and starts the lane change control at that point. The area Q is an area within which the autonomously traveling subject vehicle V1 can use information necessary for performing the autonomous lane change control, for example the lane identification information 31 for identifying each lane belonging to the route. The map information 3 has boundary information in which the boundaries of the area Q are defined by the location information. The area Q is defined for each lane or route (road) and may also be defined by the location information of a start point Q1 and an end point Q2 of each of lanes L1 to L4. The processor 10 references the boundary information of the area Q in the map information 3 and compares it with the current location of the subject vehicle V1 acquired from the subject vehicle information acquisition device 4 to determine that the subject vehicle V1 has entered the area Q. At the timing when the subject vehicle V1 enters the area Q, the processor 10 activates the autonomous lane change control function and switches the lane change control from the manual control mode to the autonomous control mode. The notification and execution of the lane change control mode switch are presented to the occupants via the I/O device 20. Before the subject vehicle V1 enters the area Q, autonomous driving control other than lane changes (such as lane keeping control) is performed, and the lane change control is performed manually by the driver.

After activating the autonomous lane change control function, the processor 10 periodically acquires the lane information of the target lane in which the subject vehicle V1 travels, and determines whether the target lane is the first lane or the second lane. This determination may be made in parallel with, or before or after, the determination of the satisfaction/unsatisfaction of the lane change condition. In this example, the leftmost lane L1 is the first lane. The lane L1 is also an overtaking lane. The traveling speed in the lane L1 (first lane) is higher than those in other lanes L2 to L4 (second lanes). The traveling speed is the vehicle speed in the actual traffic. The traveling speed may also be the set speed of an autonomously driven vehicle or the speed limit to which an autonomously driven vehicle and a manually driven vehicle have to comply. The autonomous driving control is performed at a predefined set speed. The set speed specified for autonomous driving in the first lane is less than the legal speed limit for the first lane. The traveling speed of the subject vehicle V1 traveling in the first lane under the autonomous driving control at a set speed below the speed limit is expected to be relatively lower than that of a manually driven vehicle traveling at the speed limit.

At timing T1 illustrated in FIG. 4(a), the subject vehicle V1 (T1) is traveling outside the area Q. The driver manually changes lanes, allowing the subject vehicle V1 (T1) to move from the lane L2 to the lane L1 (first lane), which is the leftmost overtaking lane. When determining that the subject vehicle V1 has entered the area Q, the processor 10 activates the autonomous lane change control function. At subsequent timing T2, the subject vehicle V1 (T2) travels in the lane L1 within the area Q. The processor 10 determines, based on the lane information, that the lane L1 is the first lane at the most extreme end of the route. When determining that the target lane in which the subject vehicle V1 travels is the first lane, the processor 10 executes the lane change control, triggered by the determination that the lane change condition is satisfied, to autonomously move the subject vehicle V1 (T2) to the adjacent lane L2. The lane L2 is the second lane, which is not the first lane.

Incidentally, within the area Q in which the autonomous lane change control is possible, autonomously driven vehicles including those that may change lanes, and manually driven vehicles travel, coexist and travel. The set speed of the subject vehicle V1, which is driven autonomously in the first lane, is below the legal speed limit for the first lane. The set speed of the subject vehicle V1 tends to be set lower than the speed limit for the first lane, taking into account the vehicle performance, autonomous driving control performance, traffic volume, and travel environment. On the other hand, since the speed limit is set based on the road environment, past performance, and experience, the manually driven vehicles are predicted to travel in the first lane at speeds close to the speed limit, while still maintaining the speed limit as an upper limit. In other words, the traveling speed (set speed) of the subject vehicle V1 in the first lane is predicted to be lower than the traveling speed of manually driven vehicles. For this reason, if the subject vehicle V1, which is driven autonomously in the first lane, continues to travel in the first lane at a relatively low speed, the following vehicles, particularly manually driven vehicles, may be forced to decelerate or prevented from accelerating. If a vehicle in the first lane, which has a relatively higher traveling speed than the second lane, is forced to decelerate, then the smooth flow of traffic in the entire first lane will be disrupted. Furthermore, drivers of manually driven vehicles traveling in the first lane, which has a relatively higher traveling speed, expect to be able to freely accelerate or maintain the speed depending on the situation. It is undesirable for an autonomously driven vehicle to interfere with this expectation. Upon the determination that the lane change condition is satisfied, when the target lane is the first lane, the processor 10 moves the subject vehicle V1 from the first lane to the adjacent lane. This prevents other vehicles, such as manually driven vehicle V3 following the subject vehicle V1, which is predicted to have a lower traveling speed than manually driven vehicle V3, from being forced to decelerate or suppress their speed (abandon acceleration), and the smooth traffic flow can be maintained.

At timing T1 illustrated in FIG. 4(b), the subject vehicle V1 (T1) is traveling outside the area Q. The subject vehicle V1 (T1) moves from the lane L3 to the lane L2 (second lane) due to a manual lane change by the driver. Although not illustrated, the subject vehicle V1 (T1) may also change lanes by the driver's manual operation from the lane L1, which is located at the leftmost end, to the lane L2. When determining that the subject vehicle V1 has entered the area Q, the processor 10 activates the autonomous lane change control function. At timing T2, the subject vehicle V1 (T2) enters the area Q and travels in the lane L2 within the area Q. The processor 10 determines, based on the lane information, that the lane L2 is not the first lane. The processor 10 determines that the target lane L2 in which the subject vehicle V1 (T2) travels is the second lane. Under this determination, the processor 10 prohibits the execution of autonomous lane change control from the lane L2 to the adjacent lanes L1 and L3, even when determining that the lane change condition is satisfied within the area Q. The processor 10 makes the subject vehicle V1 (T2) continue traveling in the target lane L2, which is determined to be the second lane. If a driver is present to manage the driving of the subject vehicle V1, the processor 10 can propose the control content to the driver before executing the autonomous control, including the autonomous lane change control. The driver may be actually aboard the subject vehicle V1, or may remotely manage the driving of the subject vehicle V1 via communication. The driver can decide the acceptance/unacceptance of the control content proposed by the processor 10 and instruct the processor 10 to that effect via the I/O device 20. The processor 10 executes the control content in accordance with the instructions input by the driver. When determining to prohibit the execution of autonomous lane change control, the processor 10 prohibits the proposal processing for the autonomous lane change control. The proposal processing is thus prohibited, and thereby the execution of autonomous lane change control is substantially prohibited. The processor 10 can skip the proposal processing for the control content. In the figure, prohibition control for the lane change proposal for the subject vehicle V1 is indicated by the letters [NG]. As a matter of course, even when the processor 10 determines to prohibit the execution of autonomous lane change control, the control is executed for the autonomous lane change based on the driver's instructions and the autonomous lane change for division and merging toward the destination and toward the exit.

It will now be assumed that the subject vehicle V1 (T2) traveling in the lane L2 at timing T2 accelerates to change lanes from the lane L2 to the lane L1 to overtake a preceding vehicle V2 (T2) detected at the same timing T2. As previously described, autonomously driven vehicles and manually driven vehicles coexist within the area Q, and the traveling speed of the manually driven vehicles in the first lane in the area Q is predicted to be higher than the set speed of the autonomously driven vehicles. Accordingly, the subject vehicle V1 traveling in the first lane may impede the acceleration of a following manually driven vehicle or cause it to decelerate. By prohibiting lane changes from the second lane to the first lane, it is possible to prevent other vehicles following the subject vehicle V1 from performing deceleration control or abandoning their acceleration operations. The deceleration control by the other vehicle includes autonomous control by the control device and manual control by the driver. As a result, lane change control can be executed that does not disrupt the smooth flow of traffic in the first lane.

It will also be assumed that the subject vehicle V1 (T2) traveling in the lane L2 at timing T2 accelerates to change lanes from the lane L2 (second lane) to a lane L3 (second lane) to overtake a preceding vehicle V2 (T2) detected at the same timing T2. Moving from the second lane to the second lane does not change the speed limit or the subject vehicle's set speed, so a change in the situation is unlikely to occur. Furthermore, the traveling speed of the lane L3, which is farther away from the lane L1 than the lane L2 from the lane L1 which is predicted to have the highest traveling speed, may be equal to or lower than the traveling speed in the lane L2. Accordingly, even if the subject vehicle V1 changes lanes to the lane L3, there is a high possibility that the slow preceding vehicle V2 will be detected again in the lane L3. When the subject vehicle V1 travels in the lane L2, the processor 10 prohibits lane changes to other lanes, particularly to the lane L2. This can prevent the subject vehicle V1 from repeatedly changing lanes due to the detection of a slow preceding vehicle again after changing lanes, thereby achieving stable travel of the subject vehicle V1.

In addition, when the target lane is determined to be the second lane, the processor 10 prohibits the execution of lane change control, which would move the subject vehicle V1 back to the lane in which it was traveling before traveling in the target lane. At timing T1 in FIG. 4(b), the subject vehicle V1 (T1) was traveling in the lane L3, but then changes lanes to the lane L2. From the fact (history) that a lane change was made at timing T1, it is predicted that the traveling speed in the original lane L3, in which the subject vehicle V1 was traveling before moving to the lane L2, is low. In other words, even if the vehicle returns to the original lane L3, there is a possibility that a low-speed preceding vehicle will be detected again. If no control is performed, the detection of a low-speed preceding vehicle ahead may trigger the lane change control again, and depending on the situation, the lane change control may be repeated. Accordingly, even when the lane change condition is satisfied, if the target lane is determined to be the second lane, the lane change to the original lane L3 in which subject vehicle V1 (T1) was traveling is prohibited. This can prevent the repetition of lane changes.

Furthermore, in this example, control is performed to delay the execution of lane change control by a predetermined time. Specifically, the processor 10 executes the lane change control when a predetermined time has elapsed from the time point of trigger for the execution of lane change control. More specifically, the processor 10 executes the lane change control when a predetermined time has elapsed from any of the following time points: 1) when a determination is made that the target lane in which the subject vehicle is traveling is the first lane; 2) when a determination is made that the lane change condition is satisfied; 3) when autonomous function of the lane change control is activated; 4) when a determination is made that the subject vehicle V1 has entered the area Q in which autonomous execution of the lane change control is possible; and 5) when the lane change control has been executed before the timing of a determination that the lane change condition is satisfied (the timing of most recently executing the lane change). Incidentally, while executing the autonomous driving control, the processor 10 manages the state and operation of the subject vehicle over time, and can acquire any of the above time points 1 through 5 stored in the RAM 13. Even when the lane change condition is satisfied, the processor 10 waits for a predetermined time to elapse before executing the lane change control, rather than immediately changing lanes. In other words, even when the lane change condition is satisfied during the predetermined time, the processor 10 invalidates the determination and waits for a determination that the lane change condition is satisfied after the predetermined time has elapsed. This allows at least a predetermined pause time to be provided between the previous execution of lane change control and the current execution of lane change control, and can suppress execution of frequent lane changes. The predetermined time does not need to be uniformly specified, and different times can be set depending on the time point to be the starting point of the predetermined time listed in each of the above 1 to 5. The time points listed in the above 1 to 4 are those after the autonomous lane change control function is activated. This can suppress immediate lane changes when the autonomous lane change control function is activated and the driving control content changes. The time point of the above 5 is a time point before the autonomous lane change control function is activated. Even before the autonomous lane change control function is activated, the processor 10 stores and manages the subject vehicle's operations over time in the RAM 13, so it can acquire the timing of the previous manual lane change from the RAM 13. In this control, two lane changes performed before and after the activation of autonomous lane change control are performed with a predetermined time interval between them. The autonomous lane change is executed after a predetermined time has passed since the lane change executed by manual control. If the autonomous lane change is enabled immediately after the activation of autonomous lane change control, an autonomous lane change that invalidates the lane change executed by manual control may be executed. By waiting for the predetermined time to pass, the autonomous driving can be executed that makes much account of the driver's driving intentions expressed in the previous manual driving, and the driver will not be confused.

### Description of Reference Numerals

100... Driving control system, 1... Driving control device, 10... Processor, 11... CPU, 12... ROM, 13... RAM, 20... I/O device, 30... Communication device, 2... Sensor, 3... Map information, 31... Lane identification information, 4... Subject vehicle information acquisition device, 5... Preceding vehicle recognition device, 6... Navigation device, 200... Vehicle controller, 210... Steering control device, 220... Drive control device

## Claims

1. A driving control method used in a processor to control autonomous driving that allows a subject vehicle to travel along a route,
the processor, upon satisfaction of a preliminarily-set lane change condition, executing lane change control for autonomously moving the subject vehicle to an adjacent lane from a target lane in which the subject vehicle is traveling,
the processor being configured to: in the lane change control,
determine, based on lane information of the route, features of the target lane in which the subject vehicle travels;
execute the lane change control upon a determination based on the features that the target lane is a first lane among a plurality of lanes of the route, the first lane being located at a most extreme end; and
upon a determination that the target lane is a second lane other than the first lane, prohibit execution of the lane change control and causes the subject vehicle to continue traveling in the second lane.

2. The driving control method according to claim 1, wherein the processor is configured to, upon a determination based on the lane information that an attribute of the target lane is an overtaking lane, determine that the target lane is the first lane.

3. The driving control method according to claim 1, wherein the processor is configured to, upon a determination based on the lane information that an attribute of all lanes located on a right or left side of the target lane is a dedicated lane in which only specific vehicles are permitted to travel or a lane with variable traffic rules whose traffic rules are changed depending on a time slot, determine that the target lane is the first lane.

4. The driving control method according to claim 1, wherein the processor is configured to, upon a determination based on the lane information that an attribute of the target lane is a dedicated lane in which only specific vehicles are permitted to travel or a lane with variable traffic rules whose traffic rules are changed depending on a time slot, determine that the target lane is the second lane.

5. The driving control method according to any one of claims 1 to 4, wherein the processor is configured to start the autonomous lane change control upon a determination that the subject vehicle has entered an area in which autonomous execution of the lane change control is possible.

6. The driving control method according to any one of claims 1 to 5, wherein the lane change control is executed when a predetermined time has elapsed from any of following time points: when a determination is made that the target lane in which the subject vehicle is traveling is the first lane; when a determination is made that the lane change condition is satisfied; when autonomous function of the lane change control is activated; when a determination is made that the subject vehicle has entered an area in which autonomous execution of the lane change control is possible; and when the lane change control has been most recently manually executed.

7. The driving control method recited in any one of claims 1 to 6, wherein the processor is configured to, upon a determination that the target lane is the second lane, prohibit execution of the lane change control to move to the lane in which the subject vehicle has traveled before traveling in the target lane.

8. A driving control device comprising a processor that controls autonomous driving that allows a subject vehicle to travel along a route,
the processor, upon satisfaction of a preliminarily-set lane change condition, executing lane change control for autonomously moving the subject vehicle to an adjacent lane from a target lane in which the subject vehicle is traveling,
the processor being configured to: in the lane change control,
determine, based on lane information of the route, features of the target lane in which the subject vehicle travels;
execute the lane change control upon a determination based on the features that the feature of the target lane is a first lane among lanes of the route, the first lane being located at a most extreme end; and
upon a determination that the target lane is a second lane other than the first lane, prohibit execution of the lane change control and causes the subject vehicle to continue traveling in the second lane.
